(19)

Europäisches
Patentamt
European
Patent Office
Office européen
des brevets

(11) **EP 3 292 927 A1**

(12) **EUROPEAN PATENT APPLICATION**

(43) Date of publication:
**14.03.2018 Bulletin 2018/11**

(51) Int Cl.:
***B22F 3/105*** *(2006.01)*          ***B29C 67/00*** *(2017.01)*
***B23K 26/342*** *(2014.01)*

(21) Application number: **16020329.5**

(22) Date of filing: **13.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Linde Aktiengesellschaft
80331 München (DE)**

(72) Inventors:
• **Scholz, Jürgen
81379 München (DE)**

• **Miklos, Ernst
85551 Kirchheim (DE)**
• **Fieret, Jim
Bell Hill, Hook Norton OX15 5PS (GB)**
• **Foret, Pierre
80796 München (DE)**

(74) Representative: **Gellner, Bernd
Linde AG
Technology & Innovation
Corporate Intellectual Property
Dr.-Carl-von-Linde-Straße 6-14
82049 Pullach (DE)**

(54) **METHOD FOR ADDITIVE MANUFACTURING**

(57)     The invention regards a method for additive manufacturing, wherein a part is built by selectively sintering or melting a material and building a part additively layer by layer using a heat source sintering or melting the material, wherein the process is conducted in a chamber and the chamber is purged with a purging gas, wherein a thermal management of the method is conducted by increasing the gas convection velocity of the purging gas, wherein the purging gas is an inert gas or reactive gas or mixture of both.

**EP 3 292 927 A1**

**Description**

The invention relates to a method for additive manufacturing, particularly additive manufacturing using metal powders.

Starting in the late 1980th a large number of additive processes are now available and widely spread. The main differences between processes relate to the way layers are deposited to obtain parts and in the materials that are used.

Especially, in additive manufacturing methods using metal powders several methods are common meanwhile.

For the processing of metal powders the nowadays used methods are, electron beam melting (EBM), selective laser melting (SLM), selective heat sintering (SHS), selective laser sintering (SLS), the direct metal laser sintering (DMLS).

In the selective laser sintering (SLS) a high power laser fuses a powder of metal (or ceramics or glass) into a mass that has a desired three-dimensional shape. In this case the laser selectively fuses powdered material by scanning cross-sections generated from a description of the part on the surface of a powder bed. After each cross-section is scanned, the powder bed is lowered by one layer thickness, a new layer of powder material is applied on top and the process is repeated until the part is completed. As the density of the finished party depends on the power of the laser and not the laser duration normally pulsed lasers are used. In these processes normally the powder material is preheated below the melting point of the powder to make it easier for the laser to read the temperature above the melting point.

With selective laser sintering parts from metals can be made including steel alloys, titanium, and alloy mixtures. In the method the physical process can be a full melting, a partial melting or a liquid phase sintering.

The direct metal laser sintering (DMLS) uses a laser which is directed to a bed of powdered metal wherein the material is melted or welded together to create the solid structure. A device for direct metal laser sintering uses a laser wherein a built chamber area uses a material dispensing platform and a built platform along with a recoater plate used to move new powder over the built platform. This technology fuses metal powder into a solid part by melting and locally using the focus laser beam. Parts are built-up and additively layer-by-layer typical using layers which are for example about 20 μm thick. The used material is stainless steel, merging steal, cobalt chromium, inconel, aluminum and titanium.

One other method to consolidate metal powders into a solid mass is the so-called electron beam melting which uses an electron beam as a heat source. This is a technique similar to selective laser sintering (SLS). In contrast to sintering techniques electron beam melting as well as selective laser sintering fully melts the metal powder in the area where the beam impacts the powder layer.

In the selective laser melting (SLM) thin layers of atomized fine metal powders are selectively melted after they have been evenly distributed using a coating mechanism onto a substrate plate using metal that is fastened to an indexing table that moves in the vertical axis. This takes place in sided chamber containing a tightly control atmosphere of inert gas, either argon or nitrogen at oxygen levels below 500 parts per million. Once each layer has been distributed, each two days of the part geometry is fused by selectively melting the powder. This is accomplished with a high power laser beam.

All these techniques have in common that the fusing or melting step is conducted in a closed chamber which is purged with an inert gas and it was previously mentioned with oxygen contents below 500 ppm.

In general additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

Due to the fact that a heat source is used even when melted polymers are printed or melted by the heat source, and due to the fact that melted liquid phase is present in any case during the manufacturing of the components, heat slowly builds up in the components until an equilibrium is reached between heat insertion and cooling. The stored heat in the component can have detrimental effects, for example on the metals or the polymers which are used and may have detrimental effects on the appearance or form of the component or on the chemical or physical properties of the material of the component.

If the heat in the built-up components or material cannot be removed as required by the specific material properties, the current solution in the state of the art for this problem is to stop the additive manufacturing process and wait until the component or the material has cooled down to an acceptable temperature.

This makes the process less productive and increases the risk from material discontinuities. For example the surface of the material or the surface of the particles which are melted down may change, for example micro layers of oxidation can occur or the surface activity of the particles or material can change according to the break in the production process.

Further, in additive manufacturing three-dimensional parts with different wall thicknesses can be achieved but in these parts it is likely, that the heat dissipation in the component will vary because of the different thicknesses. This may change the melting conditions for the powder or wire at these specific working points or - due to the different cooling or heat dissipation rates - areas occur which are already solid and other areas are still liquid or near to a liquid phase. This may lead to unstable processing conditions or unstable parts or components vary properties pertaining to chemical, physical or mechanical properties of the parts. In an ideal process already built-up components should have the same temperature all across the working area.

As already mentioned, the process can take place in an enclosed chamber filled with an inert gas or in atmospheric conditions in air. The point of impact of the heat source in the feedstock is shielded with a process or protective gas which can be an inert gas or gas mixture or mixture of inert and active gas (e.g. such as hydrogen, carbon dioxide, $N_2$, $O_2$, Argon, Helium etc.), depending on the material used.

As already mentioned the build-up of heat stock in the component during the manufacturing process may lead to a very high temperature within the component which can lead to distortion and oxidation due to small residual oxygen molecules in the gas in the chamber or from oxygen in the air surrounding the process if it takes place not in a chamber but in air or from residual oxygen molecules in the feedstock, for example a metal powder. It can also cause thermally induced changes in the process, which can also lead to distortion, porosity or other adverse effects. During the build process, the component is passively cooled by natural convection in the surrounding gas (air, or an inert gas), but this cooling is insufficient as is evident from the heat build-up.

The cooling efficiency of natural convection is predominantly determined by the velocity of the convection current, which for a vertical surface can be approximated for gases that have properties similar to air by:

$$\text{Velocity} = 0.65*[g*h*dT/(273Tg)]^{0.5}$$

where:

g is the acceleration of gravity
h is the height of the vertical plate
dT is the temperature difference between the surface and the surrounding gas
Tg is the temperature of the gas far away from the surface.

It is an object of the invention to improve a method for additive manufacturing, making the process more stable and preventing deterioration of the material.

The object is achieved by a method according to claim 1.

The invention comprises a method of thermal management of components during the additive manufacturing method, comprising a process to increase the gas convection velocity, equipment to achieve the gas flow velocity at various locations of the component where thermal management is needed most for a variety of gases and gas mixtures.

The method, equipment and processes can be applied with a variety of gases to suit the application. The gas can be inert, such as helium and argon, or nitrogen, or the gas can be an active gas, or a mixture of active gases such as carbon dioxide, oxygen, hydrogen or the combination with these gases with inert gases.

Significantly higher gas flow velocities can be reached by instead of relying on convection, forcing the gas to flow over the surface by some means of mechanical force.

One means of mechanical force is the use of axial or radial fans. Fans can produce flow velocities an order of magnitude, or more, higher than natural convection. High pressure radial fans, combined with suitably shaped nozzles or outlet ducts according to the shape of the component can provide much improved cooling for the whole of the component. The use of a fan inside a chamber makes convenient use of the existing gas atmosphere in the chamber to provide the cooling gas flow. The chamber must incorporate a separate cooler in order to keep the temperature of the gas inside the chamber within an acceptable range.

A gas stream can be retrieved from either the chamber directly or from the process gas being recirculated in the reconditioning circuit. This stream is cooled as described above and then re-injected into the chamber or the reconditioning circuit, allowing an overall decrease of temperature in the chamber.

A further improved cooling method requires higher flow velocities, and makes it possible to remove substantial amounts of heat from a small location (such as an area not far behind the interaction point of the heat source, feedstock and substrate). This method employs a means to compress the gas in the chamber, an additional cooler to cool the compressed gas, and a suitable nozzle, or arrays of multiple nozzles, aimed at the location(s) where the cooling is required.

One suitable means to compress the gas is a well-known compressor with a small plenum chamber, to which the nozzles are connected. A compressor rated to 1 bar pressure increase is able to produce a supersonic jet from a nozzle which means a gas flow in the order of 200 m/s and higher which provides much improved cooling. A higher pressure further increases the gas flow from suitably shaped nozzles and with pressures in the range of 10-20 bar, gas flow velocities in the range of 1000 m/s can be achieved for the most efficient cooling. This method is of particular benefit for additive manufacturing processes using wire or projected powder (e.g. LMD, WAAM, etc.), where the cooled gas stream can directly impinge the hot area of the built component. The nozzles will be directed on component areas, where the cooled gas jet cannot disturb the process itself, e.g. the opposite side of a wall or hollow structure or a built-up plate. Further it is possible to impinge very narrow gas streams from behind the impact area of the heat source so that the heat of the liquid material or the heat of the already solidified but still hot material is taken away by the gas stream without disturbing a powder bed.

Regardless of the type of cooling and the pressure, the nozzles and fan outlets should be aimed at the most important locations where heat requires to be removed; for example a supersonic nozzle can be mounted on the same structure as the feedstock outlet and heat source, moving along the path a short distance behind.

In the case of the feedstock being a powder, or a ribbon, suitable baffles and shields must be applied around the powder source and flow path so that the cooling jets do not disturb the additive manufacturing process by blowing the powder out of its intended path.

It is advantageous with the invention that it greatly reduces the build-up of heat in components during the additive manufacturing process. The invention makes it possible to carefully manage the thermal processes by control of the cooling gas flow and the temperature of the component, in multiple locations. Using the cooled gas nozzle variant, it is possible to extract the heat from the built up component exactly at those spots, where the metallurgical risks are the highest. This allows a narrow temperature window on the component, ensuring more reproducible melting conditions. Using the process gas anyhow selected to best suit the material. This method excludes contamination of the gas atmosphere. To cool the process gas, a recirculation in a closed loop is used. As most Additive Manufacturing processes and materials specify dry process gases, the cooling will not generate difficulties with condensation of moisture in the chamber or the nozzles.

Further it can be advantageous to not only cool but dry the gas stream. Further it is possible to have filter elements in the gas stream so that if the high velocity gas streams contain dust from the feedstock, this dust is removed from the gas stream.

The invention can also be applied in an advantageous manner to other processes, such as arc based, plasma based and laser based welding, laser cutting, oxygen fuel cutting, plasma cutting.

Further, other advantageous applications are surface heat treatment, cladding and surface hardening by means of controlled heating cooling cycles.

**Claims**

1. Method for additive manufacturing, wherein a part is built by selectively sintering or melting a material and building a part additively layer by layer using a heat source sintering or melting the material, wherein the process is conducted in a chamber and the chamber is purged with a purging gas, **characterized in that**, a thermal management of the method is conducted by increasing the gas convection velocity of the purging gas, wherein the purging gas is an inert gas or reactive gas or mixture of both.

2. Method according to claim 1 wherein the higher convection velocities are reached by forcing the gas to flow over the surface of the sintered or melted material by means of mechanical force i.e. axial or radial fans combined with suitably shaped nozzles or outlet ducts according to the shape of the component.

3. Method according to claim 2, wherein as means to increase the gas flow a fan is located inside the chamber that uses the existing gas atmosphere in the chamber to provide the cooling gas flow.

4. Method according to one of the preceding claims, **characterized in that** the gas is cooled by separate gas cooler.

5. Method according to one of the preceding claims, **characterized in that** a gas stream is retrieved from either the chamber directly or from the process gas being recirculated in a reconditioning circuit, wherein the stream is cooled and re-injected into the chamber allowing an overall decrease of temperature in the chamber.

6. Method according to one of the preceding claims, wherein the gas stream is directed to an area in the vicinity of the point of impact of the heat source. i. e. a laser beam or an electron beam on the component.

7. Method according to one of the preceding claims, **characterized in that** the method employs a means to compress the gas in the chamber, an additional cooler to cool the compressed gas and a suitable nozzle or array of multiple nozzles, aimed at the location where the cooling is required, i.e. the point of impact of the heat source.

8. Method according to one of the preceding claims, **characterized in that** the additive manufacturing method is an electron beam melting or selective laser melting or a selective heat sintering or a selective laser sintering or a direct metal laser sintering or other common additive manufacturing methods in which metal, ceramic or polimal powders or rods are processed.

9. Method according to one of the preceding claims, **characterized in that** the cooled gas stream directly impinges the hot area of the built components wherein the nozzles are directed to component areas where the cooled gas jet cannot disturb the process itself, e.g. opposite side of a wall or hollow structure or a built-up plate and/or where the gas stream impinges this very narrow gas streams from behind the impact area of the heat source so that the heat of the liquid material or the heat of the already solidified but still hot material is taken away by the gas stream without disturbing a powder bed.

10. Method according to one of the preceding claims, **characterized in that** in cases where the feedstock is a powder or a ribbon suitable baffles and shields are applied around the powder source and flow path so that the cooling jets do not disturb the additive manufacturing process by blowing the powder off its intended path.

11. Method according to one of the preceding claims, **characterized in that** to cool the process gas recirculation in a closed loop is used.

12. Method according to claim 11, **characterized in that** the gas is dried in the recirculation path of the closed loop and/or cooled in the recirculation path of the closed loop and/or filtered for dust particles in the closed recirculation path of the closed loop.

Europäisches
Patentamt

European
Patent Office

Office européen
des brevets

## EUROPEAN SEARCH REPORT

Application Number

EP 16 02 0329

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 92/08592 A1 (DTM CORP [US])<br>29 May 1992 (1992-05-29)<br>* claims 14, 20-22, 24 *<br>* page 1, lines 5-7 *<br>* page 5, lines 8-36 *<br>* page 7, lines 8-28 *<br>* page 9, lines 4-16 *<br>* page 11, lines 21-30 *<br>* page 14, lines 9-36 *<br>* page 15, lines 1-36 *<br>* page 16, lines 1-36 *<br>* page 17, lines 1-36 *<br>* page 18, lines 1-25 *<br>* page 23, lines 20-32 *<br>* figures 1, 2, 4-6 *<br>----- | 1,2,4-6,<br>8-12<br>3,7 | INV.<br>B22F3/105<br>B29C67/00<br>B23K26/342 |
| X<br><br>Y<br>A | US 2016/207147 A1 (VAN HASSEL BART A [US])<br>21 July 2016 (2016-07-21)<br>* claims 1, 3-5, 11, 17, 19 *<br>* paragraphs [0030], [0044] - [0057] *<br>* figures 1-7 *<br>----- | 1,4-6,8,<br>11,12<br>7<br>2,3,9,10 | |
| X<br><br>A | WO 2016/102970 A1 (RENISHAW PLC [GB])<br>30 June 2016 (2016-06-30)<br>* claims 1-17 *<br>* page 7, lines 1-31 *<br>* page 8, lines 1-30 *<br>* page 9, lines 1-31 *<br>* page 10, lines 1-31 *<br>* page 11, lines 1-7, 30-31 *<br>* page 12, lines 1-31 *<br>* page 13, lines 1-25 *<br>* figures 1-3, 5 *<br>----- | 1,4-6,8,<br>11,12<br>2,3,7,9,<br>10 | TECHNICAL FIELDS<br>SEARCHED (IPC)<br><br>B22F<br>B29C<br>B23K<br>B23Q |
| X<br><br>A | CN 205 254 109 U (ETELUX INERTGAS-SYSTEM CO LTD) 25 May 2016 (2016-05-25)<br>* claims 1-5 *<br>* paragraphs [0052] - [0081]; figure 2 *<br>----- | 1,2,4-6,<br>8,11,12<br>3,7,9,10 | |

-/--

The present search report has been drawn up for all claims

| Place of search | Date of completion of the search | Examiner |
|---|---|---|
| The Hague | 10 February 2017 | Traon, Nicolas |

EPO FORM 1503 03.82 (P04C01)

Europäisches
Patentamt

European
Patent Office

Office européen
des brevets

# EUROPEAN SEARCH REPORT

Application Number

EP 16 02 0329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/088048 A1 (SABIC GLOBAL TECHNOLOGIES BV [NL]) 9 June 2016 (2016-06-09) | 1,2,4,8 | |
| A | * claims 1, 2 * * paragraphs [0026], [0028], [0055], [0060] * * figures 1-6 * ----- | 3,5-7, 9-12 | |
| Y | EP 2 492 084 A1 (PANASONIC CORP [JP]) 29 August 2012 (2012-08-29) | 3 | |
| A | * claims 1, 5 * * paragraphs [0031], [0035], [0040] * * figures 10-12, 14, 15 * ----- | 1,2,4-12 | |

| | |
|---|---|
| | TECHNICAL FIELDS SEARCHED (IPC) |

The present search report has been drawn up for all claims

| Place of search | Date of completion of the search | Examiner |
|---|---|---|
| The Hague | 10 February 2017 | Traon, Nicolas |

EPO FORM 1503 03.82 (P04C01)

**EP 3 292 927 A1**

## ANNEX TO THE EUROPEAN SEARCH REPORT
## ON EUROPEAN PATENT APPLICATION NO.

EP 16 02 0329

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2017

| Patent document cited in search report | | | Publication date | Patent family member(s) | | | Publication date |
|---|---|---|---|---|---|---|---|
| WO 9208592 | | A1 | 29-05-1992 | AU | 9065991 | A | 11-06-1992 |
| | | | | WO | 9208592 | A1 | 29-05-1992 |
| US 2016207147 | | A1 | 21-07-2016 | NONE | | | |
| WO 2016102970 | | A1 | 30-06-2016 | NONE | | | |
| CN 205254109 | | U | 25-05-2016 | NONE | | | |
| WO 2016088048 | | A1 | 09-06-2016 | NONE | | | |
| EP 2492084 | | A1 | 29-08-2012 | CN | 102574333 | A | 11-07-2012 |
| | | | | CN | 104741608 | A | 01-07-2015 |
| | | | | EP | 2492084 | A1 | 29-08-2012 |
| | | | | JP | 5653358 | B2 | 14-01-2015 |
| | | | | US | 2012251378 | A1 | 04-10-2012 |
| | | | | WO | 2011049143 | A1 | 28-04-2011 |

EPO FORM P0459

For more details about this annex : see Official Journal of the European Patent Office, No. 12/82